# FASCICULE DE BREVET EUROPEEN

(11) **EP 4 223 407 B1**
(45) Date de publication et mention de la délivrance du brevet: **20.11.2024**
(21) Numéro de dépôt: 23155165.6
(22) Date de dépôt: 06.02.2023
(51) Int. Cl.: B01J 8/00, B01J 15/00, B01J 19/32, B01J 4/00, B66C 1/10, B66C 1/42, B01D 47/14

(54) **DISPOSITIF D'INSERTION D'UN TRONÇON DE GARNISSAGE**
VORRICHTUNG ZUM EINSETZEN EINES PACKUNGSABSCHNITTS
DEVICE FOR INSERTING A TRIM SECTION

(30) Priorité: 08.02.2022 FR 2201100
(43) Date de publication de la demande: 09.08.2023
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: BABINET, Cyrille, 94400 VITRY SUR SEINE (FR); GALLOPIN, Eric, 78350 JOUY EN JOSAS (FR); LEBAIN, Gilles, 94400 VITRY SUR SEINE (FR)
(74) Mandataire: Air Liquide

(56) Documents cités:
- DE-C1- 3 610 457
- JP-A- 2015 217 380
- JP-A- H01 242 102
- JP-A- H11 333 283
- JP-A- S5 794 340
- US-A- 2 604 220
- US-A- 4 929 012
- US-A1- 2010 063 304
- US-A1- 2014 126 981
- US-A1- 2021 245 099

## Description

La présente invention se rapporte au domaine des colonnes de séparation liquide/gaz et à leur assemblage et elle concerne plus particulièrement un dispositif pour l'insertion de ces tronçons de garnissage dans une virole afin de former ces dites colonnes de séparation liquide/gaz.

Les colonnes de séparation gaz/liquide sont connues depuis de nombreuses années et permettent par exemple de réaliser une séparation de différents éléments chimiques entrant dans la composition d'un fluide homogène, par exemple par distillation ou par absorption.

La fabrication d'une colonne de séparation liquide/gaz comprend notamment une étape d'agrippement d'un tronçon de garnissage par un dispositif d'insertion de tronçons de garnissage afin de l'insérer par la suite au sein d'une virole cylindrique. Les tronçons de garnissages sont notamment utilisés dans les colonnes pour assurer l'échange de matière et de chaleur entre un gaz montant et un liquide descendant. Ces tronçons de garnissage, qui sont notamment constitués par une superposition de plusieurs bandes ondulées, sont souvent appelés "packs". Les tronçons de garnissage sont classiquement empilés les uns sur les autres, le cas échéant avec des séparateurs interposés, afin de participer à la séparation des composants du fluide sur la dimension axiale de la colonne.

Le dispositif d'insertion doit comprendre des moyens d'accroche permettant d'agripper un tronçon de garnissage par les côtés de celui-ci. L'agrippement peut toutefois être problématique dans la mesure où les viroles des colonnes de séparation au sein desquels doivent être insérés les tronçons de garnissage ne présentent pas toutes nécessairement le même diamètre.

Dans ce contexte, les tronçons de garnissage peuvent présenter un diamètre allant de 1m à 5m, ce qui rend difficile l'agrippement optimal de l'ensemble d'une gamme de tronçons de garnissage.

Il est envisageable d'utiliser un dispositif d'insertion adapté à chaque diamètre de tronçon de garnissages mais une telle solution nécessite des moyens financiers trop importants pour être viable. JP-H01-242102-A, US2021/0245099-A1, JP-H11-333283-A, DE3610457-C1, JP-S57-94340-A, US2014/0126981-A1 sont des brevets qui concernent l'insertion de tronçon de garnissage dans des viroles.

La présente invention s'inscrit dans ce contexte et permet d'envisager l'assemblage de colonnes de séparation liquide/gaz pour tous diamètres de tronçons de garnissage en utilisant un dispositif d'agrippement équipés de moyens d'accroche qui permettent de s'adapter à ces différents diamètres.

La présente invention propose un dispositif d'insertion d'au moins un tronçon de garnissage pour une colonne de séparation gaz/liquide au sein d'une virole cylindrique, dans lequel un module de déploiement comporte un montant principal, centré autour d'un axe principal du dispositif d'insertion, et une pluralité de montants périphériques agencés de manière circonférentielle et régulière autour de l'axe principal, chacun des montants périphériques participant à former le support (60) d'un dispositif d'agrippement comportant un support formant bâti et des moyens d'accroche reliés à ce support et répartis angulairement pour entourer le tronçon de garnissage à agripper, au moins un des moyens d'accroche comportant des patins mobiles respectivement destinés à être au contact d'un bord périphérique du tronçon de garnissage et une pluralité de paliers disposés en au moins deux étages, chaque palier portant des moyens d'articulation aptes à coopérer avec un palier d'un étage différent ou un des patins mobiles, en portant respectivement un des moyens d'accroche configuré pour agripper un tronçon de garnissage , le module de déploiement étant apte à modifier la dimension du dispositif d'insertion pour ajuster la position des moyens d'accroche autour du tronçon de garnissage à agripper, en modifiant une distance radiale entre le montant principal et chacun des montants périphériques.

Selon l'invention, le moyen d'accroche présente une configuration avec une pluralité d'étages d'éléments articulés qui permet d'offrir une infinité de configurations du dispositif d'agrippement et de trouver la configuration adaptée selon le diamètre du tronçon de garnissage à agripper. La position des patins destinés à être au contact du tronçon de garnissage peut être ajustée, les patins les uns par rapport aux autres, avec une plus grande finesse du fait d'une articulation de chacun des éléments articulés entre eux, étage par étage.

Selon une autre caractéristique optionnelle de l'invention, les moyens d'accroche sont agencés les uns par rapport aux autres de manière à former un cercle, lesdits moyens d'accroche étant régulièrement répartis angulairement. De la sorte, les moyens d'accroche peuvent être au contact du bord périphérique d'un tronçon de garnissage de forme cylindrique droite et les efforts de pression exercés sur le tronçon de garnissage peuvent être régulièrement répartis.

Selon une autre caractéristique optionnelle de l'invention, le dispositif d'agrippement comporte six moyens d'accroche.

Selon une autre caractéristique optionnelle de l'invention, chaque moyen d'accroche comporte un palier de base relié au support du dispositif d'agrippement et qui porte un ensemble de moyens d'articulations aptes à coopérer avec des premiers paliers additionnels formant un premier étage de paliers du dispositif d'agrippement. Les différents étages de paliers et de patins du moyen d'accroche prennent ainsi tous appui sur le palier de base, qui permet d'assurer la fixation du moyen d'accroche sur le support, que celui-ci soit spécifique à ce moyen d'accroche ou commun à tous les moyens d'accroche.

Selon une autre caractéristique optionnelle de l'invention, les premiers paliers additionnels comportent chacun des moyens d'articulation aptes à coopérer respectivement avec des deuxièmes paliers additionnels, formant un deuxième étage de paliers du dispositif d'agrippement, ou des patins mobiles.

Selon une autre caractéristique optionnelle de l'invention, les patins mobiles sont montés pivotants sur des paliers d'un même étage de paliers du dispositif d'agrippement.

En d'autres termes, les paliers sont disposés les uns à côté des autres pour former un étage final, ou étage distal, c'est-à-dire l'étage le plus éloigné du palier de base et destiné à être au contact du tronçon de garnissage à agripper.

Selon une autre caractéristique optionnelle de l'invention, les patins mobiles comportent une surface d'accroche qui s'inscrit dans un plan droit, tangent au bord périphérique du tronçon de garnissage à agripper.

En d'autres termes, si l'on considère une direction radiale s'étendant du support jusqu'au tronçon de garnissage, chaque surface d'accroche s'inscrit dans un plan droit sensiblement perpendiculaire à cette direction radiale, de manière à définir un contact ponctuel ou linéaire entre le patin et le bord périphérique du tronçon de garnissage. Selon une autre caractéristique optionnelle de l'invention, le dispositif d'agrippement comporte un système motorisé configuré pour entraîner en déplacement radial le palier de base, ledit système motorisé étant inséré entre le palier de base et le support du dispositif d'agrippement.

Le système motorisé, qui peut notamment être un moteur électrique pas à pas, est notamment destiné à gérer l'écartement du moyen d'accroche correspondant par rapport au tronçon de garnissage pour gérer la pression de serrage des patins contre le bord périphérique de ce moyen d'accroche. Le cas échéant, l'utilisation du système motorisé peut permettre d'ajuster une contrainte de pression spécifique au niveau du moyen d'accroche correspondant.

Selon une autre caractéristique optionnelle de l'invention, le support présente la forme d'un cadre polygonal, qui comporte autant de côtés que le dispositif d'agrippement comporte de moyens d'accroche, chaque moyen d'accroche étant fixé à l'intérieur du support au niveau d'un sommet du cadre polygonal.

Grâce au dispositif d'insertion selon cet autre aspect de l'invention, et plus particulièrement au module de déploiement, les moyens d'accroche peuvent agripper n'importe quel type de tronçon de garnissage, de n'importe quel diamètre. Avant de procéder à l'agrippement des tronçons de garnissage, le module de déploiement est paramétré de manière à définir la distance radiale entre le montant principal et les montants périphériques, et ainsi positionner les moyens d'accroche, qui sont agencés sur les montants périphériques, les uns par rapport aux autres de manière à former un motif, notamment circulaire, de dimensions complémentaires au pourtour du tronçon de garnissage à agripper. La distance radiale est la même entre le montant principal et chacun des montants périphériques afin d'obtenir un diamètre virtuel défini par la forme circulaire prise par les moyens d'accroche et adapté au diamètre des tronçons de garnissage.

Il est particulièrement avantageux d'équiper un tel dispositif d'insertion d'un dispositif d'agrippement tel qu'évoqué précédemment, afin que les moyens articulés, c'est-à-dire les paliers et/ou les patins, prévus dans ce dispositif d'agrippement puissent adapter le profil du dispositif d'agrippement à la dimension du tronçon de garnissage à agripper. Les patins peuvent être correctement plaqués sur le pourtour du tronçon de garnissage à agripper, quel que soit le diamètre de celui-ci.

Les montants périphériques sont tous parallèles ou sensiblement parallèles à l'axe principal. Les moyens d'accroche peuvent être agencés sur l'ensemble des montants périphériques ou seulement sur certains d'entre eux.

Selon une caractéristique de l'invention, le dispositif d'insertion d'au moins un tronçon de garnissage au sein d'une virole cylindrique peut être associé à une structure porteuse en formant ainsi un système d'insertion qui assure des fonctions supplémentaires comme le déplacement du dispositif d'insertion.

La structure porteuse se présente sous la forme d'un portique apte à se déplacer selon au moins une direction tout en portant le dispositif d'insertion agrippant un tronçon de garnissage. Pour opérer un tel déplacement, la structure porteuse peut par exemple être agencé sur des rails afin que le déplacement se fasse selon la direction la plus précise possible.

Un tel système d'insertion permet d'agripper des tronçons de garnissage de différents diamètres, puis d'insérer ceux-ci au sein d'une virole agencée horizontalement.

Selon une caractéristique de l'invention, le dispositif d'insertion est apte à effectuer dans son ensemble un mouvement de translation de manière relative à la structure porteuse. Indépendamment de la structure porteuse, le dispositif d'insertion peut se déplacer par exemple de manière verticale. Ce déplacement vertical est utile par exemple pour positionner le dispositif d'insertion à l'aplomb d'une pile de tronçons de garnissage, puis pour le descendre dans le but d'agripper le tronçon de garnissage disposé au sommet de la pile. Le déplacement vertical du dispositif d'insertion par rapport à la structure porteuse est également utile dans le but d'ajuster la position du tronçon de garnissage agrippé afin de positionner correctement celui-ci à l'entrée de la virole et ainsi de favoriser la poussée du tronçon de garnissage au sein de la virole. Le déplacement relatif du dispositif d'insertion par rapport à la structure porteuse peut par exemple se faire à l'aide d'un moteur embarqué sur la structure porteuse et configuré pour déplacer un élément porteur du dispositif d'insertion le long de la structure porteuse.

Selon une caractéristique de l'invention, le dispositif d'insertion est apte à effectuer dans son ensemble une rotation de manière relative à la structure porteuse. La rotation permet notamment de basculer le dispositif d'insertion, avec une structure porteuse qui reste fixe, entre une position où le dispositif d'insertion est agencé de manière verticale dans le but d'agripper un tronçon de garnissage sur une pile verticale de tronçons de garnissage, et une position où le dispositif d'insertion est agencé de manière horizontale dans le but de procéder à l'insertion du tronçon de garnissage agrippé au sein de la virole. Les éléments de rotation doivent donc être configurés pour permettre une rotation du dispositif d'insertion d'environ 90°, afin que le dispositif d'insertion puisse basculer entre les positions verticales et horizontales évoquées précédemment. La rotation relative du dispositif d'insertion par rapport à la structure porteuse peut par exemple se faire à l'aide d'un moteur apte à piloter un système à engrenages entraînant la rotation du dispositif d'insertion, ou bien encore via un système à chaîne ou un système hydraulique.

L'invention couvre également un procédé d'insertion d'au moins un tronçon de garnissage au sein d'une virole cylindrique mis en oeuvre au moins en partie par un dispositif d'insertion tel que décrit précédemment, comprenant :
- une étape d'ajustement de la distance radiale entre le montant principal et les montants périphériques du module de déploiement,
- une étape d'agrippement d'un tronçon de garnissage par les moyens d'accroche du dispositif d'insertion,
- une étape de positionnement du tronçon de garnissage au niveau d'une entrée de la virole,
- une étape de relâchement du tronçon de garnissage par les moyens d'accroche,
- une étape de poussée du tronçon de garnissage au sein de la virole.

Les étapes du procédé se font à l'aide des différents éléments évoqués précédemment du dispositif d'insertion. Notamment, et tel que cela a été décrit précédemment, le module de déploiement assure l'étape d'ajustement de la distance radiale entre le montant principal et les montants périphériques et l'étape d'agrippement se fait à l'aide des moyens d'accroche du dispositif d'insertion.

En fin de procédé, l'étape de poussée peut se faire à l'aide de dispositifs télescopiques insérant le tronçon de garnissage au sein de la virole. Il convient de noter qu'il s'agit ici d'une liste d'étapes non exhaustive pour le bon déroulement du procédé d'insertion de tronçons de garnissage au sein de la virole selon l'invention.

A titre d'exemple non limitatif, on pourra prévoir dans le procédé selon l'invention une étape de contrôle du bon positionnement du tronçon de garnissage une fois inséré dans la virole. Cette étape additionnelle, venant ici à la suite de l'étape de poussée, consiste alors en une vérification et un enregistrement de la bonne position du tronçon de garnissage qui vient d'être inséré, à l'aide d'un appareil de mesure précis au millimètre.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig. 1] est une vue générale d'un dispositif d'insertion, conforme à l'invention, ici associée à une structure porteuse, lors de l'insertion d'un tronçon de garnissage au sein d'une virole, le dispositif d'insertion étant équipé d'un dispositif d'agrippement et ici avec des moyens d'accroche dans une position de dégagement ;
[Fig. 2] représente le dispositif d'insertion de la figure 1, ici sans la structure porteuse associée, avec un module de déploiement permettant de modifier l'écartement radial du dispositif d'agrippement, deux moyens d'accroche de ce dispositif d'agrippement étant ici visibles dans une position active d'agrippement d'un tronçon de garnissage ;
[Fig. 3] est une représentation schématique d'un des moyens d'accroche du dispositif d'agrippement selon un mode de réalisation de l'invention, ce moyen d'accroche comprenant plusieurs étages de paliers et une pluralité de patins destinés à être au contact du tronçon de garnissage à agripper ;
[Fig. 4] est une représentation schématique, en coupe dans un plan parallèle à un axe autour duquel sont agencés les moyens d'accroche du dispositif d'agrippement, d'une partie d'un moyen d'accroche, rendant notamment visibles les formes spécifiques des paliers et d'un patin de ce moyen d'accroche ;
[Fig. 5] est une représentation schématique similaire à celle de la figure 3, dans laquelle un des paliers et les patins qu'il porte ont été représentés dans une position hypothétique pour illustrer leur montage pivotant ;
[Fig. 6] représente le moyen d'accroche de la figure 3 dans une première configuration, dans laquelle il est apte à assurer l'agrippement d'un tronçon de garnissage de premier diamètre ;
[Fig. 7] représente le moyen d'accroche de la figure 3 dans une deuxième configuration, dans laquelle il est apte à assurer l'agrippement d'un tronçon de garnissage de deuxième diamètre ;
[Fig. 8] est une représentation schématique d'un système motorisé du dispositif d'agrippement permettant de positionner un moyen d'accroche dans une position de dégagement ou dans une position active d'agrippement d'un tronçon de garnissage, le système motorisé étant ici disposé dans un montant propre au moyen d'accroche ;
[Fig. 9] représente une variante du dispositif d'agrippement de l'invention, dans laquelle le moyen d'accroche, ici similaire à celui de la figure 3, est relié à un support hexagonal commun à chacun des moyens d'accroche ;
[Fig. 10] représente une étape d'agrippement d'un tronçon de garnissage d'un procédé d'insertion de tronçons de garnissage,
[Fig. 11] représente une étape de rotation du dispositif d'insertion et de déplacement du système d'insertion du procédé d'insertion de tronçons de garnissage,
[Fig. 12] représente une étape d'insertion du tronçon de garnissage du procédé d'insertion de tronçons de garnissage.

Pour rappel, l'invention concerne des moyens d'accroche qui forment un dispositif d'agrippement d'un tronçon de garnissage. Plus particulièrement, l'invention concerne un dispositif d'agrippement comportant une structure formant bâti et des moyens d'accroche reliés à cette structure et répartis angulairement pour entourer le tronçon de garnissage à agripper, un ou plusieurs des moyens d'accroche comportant des élément articulés, disposés en étage, pour pouvoir prendre plusieurs configurations respectivement optimales pour une dimension précise d'un tronçon de garnissage à agripper. Un exemple détaillé de ces éléments articulés sera donné ci-après.

Par ailleurs, le dispositif d'agrippement va être décrit dans une application à un système d'insertion de tronçon de garnissage dans une virole, mais il convient de noter que l'exemple de système d'insertion qui va être plus particulièrement décrit n'est pas limitatif de l'invention. Les moyens d'accroche du dispositif d'agrippement peuvent ainsi être portés par un support du système d'insertion qui assure à la fois le transport du tronçon de garnissage en regard de la virole puis la poussée de ce tronçon de garnissage au sein de la virole, ou bien par un support qui n'est fonctionnel que lors du transport du tronçon de garnissage, la poussée de ce tronçon de garnissage au sein de la virole étant faite par un autre dispositif.

Dans un premier temps, on va décrire le dispositif d'agrippement selon l'invention dans son application dans un système d'insertion 1 apte à assurer d'une part le transport du tronçon de garnissage en regard de la virole, par mise en oeuvre du dispositif d'agrippement, puis la poussée de ce tronçon de garnissage au sein de la virole, une fois le dispositif d'agrippement désengagé du tronçon de garnissage.

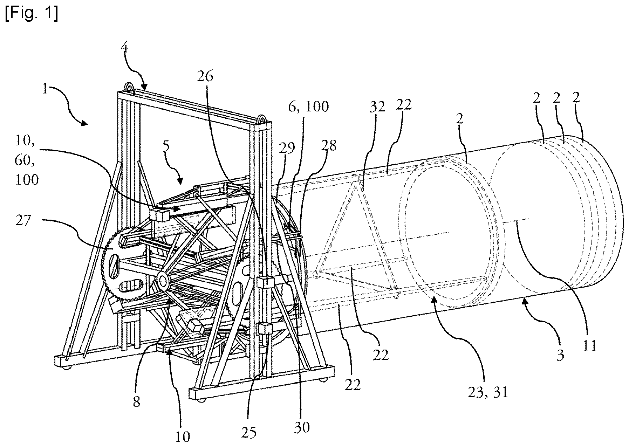

La figure 1 représente un tel système d'insertion 1 de tronçons de garnissage 2 au sein d'une virole 3, utilisé notamment dans le but de former une colonne de séparation gaz/liquide. De telles colonnes de séparation se présentent par exemple sous une forme cylindrique à section circulaire ou sensiblement circulaire. Les colonnes de séparation peuvent présenter une dimension principale de plusieurs dizaines de mètres et une section cylindrique de plusieurs mètres. Les tronçons de garnissage 2 amenés à être insérés au sein de ces colonnes de séparation peuvent présenter une section circulaire ou sensiblement circulaire d'un diamètre de l'ordre de 1m à 5m.

Ici le système d'insertion 1 permet une insertion à l'horizontale des tronçons de garnissage au sein de la virole, ce qui peut notamment être avantageux pour des raisons d'encombrement mécanique en termes de hauteur rendant impossible l'opération d'insertion des tronçons de garnissage lorsque la virole est agencée verticalement.

Il convient toutefois de noter que cet agencement du système d'insertion et l'insertion des tronçons de garnissage 2 selon une direction horizontale tel qu'illustré pourraient être autres sans sortir du contexte de l'invention, dès lors que le système d'insertion comporte un module de déploiement tel qu'il va être décrit ci-après.

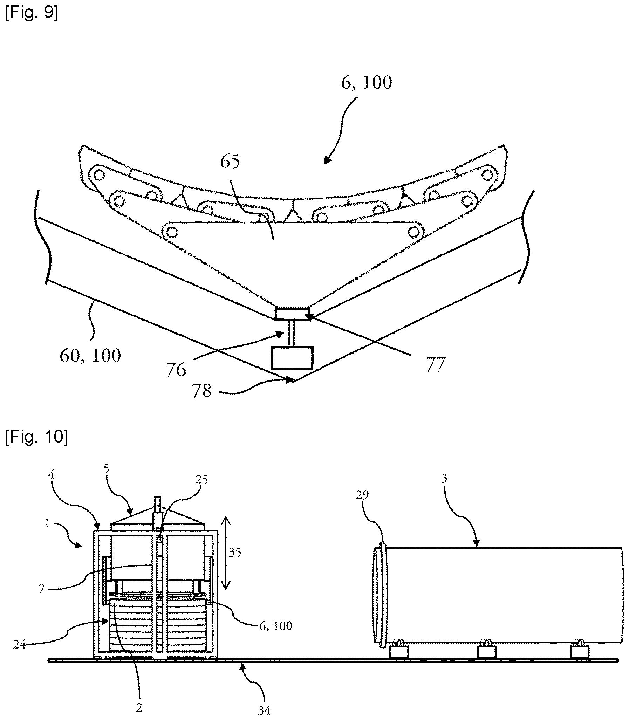

Le système d'insertion 1 de tronçons de garnissage selon l'invention permet d'opérer un procédé d'insertion desdits tronçons de garnissage 2 au sein de la virole, qui sera décrit ci-après plus en détails en référence aux figures 10 à 12. Un tel système d'insertion 1 permet notamment d'agripper un tronçon de garnissage 2 sur une pile 24 verticale de tronçons de garnissage tel que cela est illustré sur la figure 10. Le système d'insertion 1 permet par la suite d'effectuer une rotation afin d'agencer le tronçon de garnissage 2 en regard d'une entrée de la virole, de se déplacer jusqu'à l'entrée de la virole, puis de pousser le tronçon de garnissage 2 jusqu'au fond de la virole ou contre un autre tronçon de garnissage 2 déjà inséré au sein de la virole, en assurant une avancée la plus fluide possible, c'est-à-dire avec le moins d'à-coups possible, du tronçon de garnissage 2 au sein de la virole.

Pour ce faire, le système d'insertion 1 comprend une structure porteuse 4, ainsi qu'un dispositif d'insertion 5 agencé sur la structure porteuse 4, et comprenant notamment des moyens d'accroche 6 permettant d'agripper les tronçons de garnissage 2.

Selon l'invention, ces moyens d'accroche 6 forment partie d'un dispositif d'agrippement 100 configuré pour pouvoir assurer un agrippement efficace d'un tronçon de garnissage quel que soit son diamètre, tel que cela sera décrit plus en détails ci-après.

La structure porteuse 4 se présente sous la forme d'un portique comprenant deux piliers 7 entre lesquels repose le dispositif d'insertion 5. La structure porteuse 4 peut par exemple être montée sur rails afin que le système d'insertion 1 puisse opérer un déplacement linéaire entre la pile 24 de tronçons de garnissage 2 et la virole.

Dans l'exemple illustré, le système d'insertion 1 comprend un premier moteur 25 permettant au dispositif d'insertion 5 d'effectuer dans son ensemble un mouvement de translation par rapport à la structure porteuse 4.

Le système d'insertion 1 comprend également un deuxième moteur 26 permettant d'actionner un système d'engrenages 27 permettant de déplacer le dispositif d'insertion 5 dans son ensemble de sorte à effectuer une rotation de manière relative à la structure porteuse 4. Cette rotation permet de faire passer le dispositif d'insertion d'une position verticale à une position horizontale, de manière à pouvoir agencer le tronçon de garnissage 2 en regard de l'entrée de la virole tel que mentionné précédemment.

Comme cela a été mentionné précédemment, le diamètre des tronçons de garnissage peut varier entre 1m et 5m. Avant de procéder à l'agrippement des tronçons de garnissage, il est important de pouvoir adapter le dispositif d'insertion au diamètre de tronçon de garnissage considéré, et ce afin que les moyens d'accroche puissent être en regard du bord périphérique 75 des tronçons de garnissage 2 et être aptes, par leur structure particulière qui va être décrit ci-après, à agripper les tronçons de garnissage de manière optimale et la plus fiable possible. Ainsi, avant de procéder à l'étape d'agrippement du tronçon de garnissage au cours du procédé d'insertion de celui-ci, le dispositif d'insertion doit être dimensionné de manière adéquate.

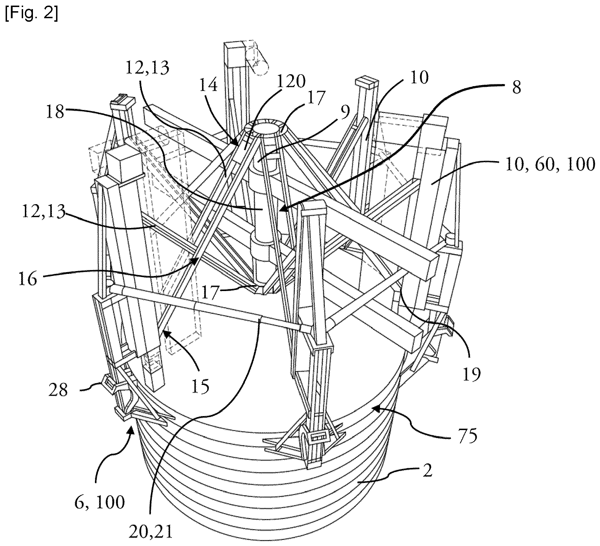

Pour ce faire, le dispositif d'insertion 5 comprend un module de déploiement 8 comprenant les moyens d'accroche 6. Plus particulièrement, le module de déploiement 8 comprend un montant principal 9 et une pluralité de montants périphériques 10 parallèles au montant principal 9. Le montant principal 9 s'étend principalement selon un axe principal 11 passant par le centre ou sensiblement par le centre du tronçon de garnissage 2 agrippé. Les montants périphériques 10 sont agencés de manière circonférentielle et régulière autour du montant principal 9. C'est au niveau des montants périphériques 10 que sont agencés les moyens d'accroche 6 évoqués précédemment. Le module de déploiement 8 comprend au moins deux montants périphériques 10. D'une manière avantageuse, et tel que cela est notamment visible sur la figure 2, le module de déploiement comprend au moins six montants périphériques.

Chaque montant périphérique 10 est mécaniquement relié au montant principal 9 par deux branches 12 formant un duo de branches 13. Chacune des deux branches 12 comprend une première extrémité 14 liée au montant principal 9, et une deuxième extrémité 15 liée au montant périphérique 10.

De plus, les deux branches 12 du duo de branches 13 sont sécantes entre elles et sont liées entre elles au niveau de leur point d'intersection, c'est-à-dire sensiblement en leur centre, par une liaison pivot 16. Dans l'exemple illustré, chaque branche 12 est formée de deux montants parallèles rendues solidaires l'une de l'autre par une entretoise 120, ces entretoises maintenant l'écartement des branches l'une de l'autre. Pour un duo de branches 13, les branches 12 présentent un écartement différent entre leurs montants, de sorte qu'une première branche, dont les montants sont plus écartés que ceux de la deuxième branche, encadre la deuxième branche au niveau du point d'intersection. Les montants d'une des branches présentent chacun un pion dirigé vers les montants de l'autre branche et apte à s'engager respectivement dans un orifice correspondant formé dans l'un des montants de l'autre branche.

C'est notamment grâce aux duos de branches 12 du module de déploiement 8, et plus particulièrement grâce à la modification d'une inclinaison des branches de chaque duo de branches, qu'une distance radiale entre le montant principal 9 et les montants périphériques 10 peut être réglée et que les moyens d'accroche 6, agencés sur lesdits montants périphériques 10, peuvent ainsi être rapprochés ou éloignés de l'axe principal selon un diamètre adaptable et assurant ainsi une compatibilité avec une large gamme de diamètres de tronçons de garnissage. Cette modification de la distance radiale se fait de manière simultanée entre le montant principal et l'ensemble des montants périphériques. Les détails concernant le fonctionnement du module de déploiement seront décrits par la suite.

Grâce au module de déploiement, les moyens d'accroche sont ainsi positionnés, et notamment écartés les uns par rapport aux autres, pour saisir correctement le tronçon de garnissage, et ce peu importe le diamètre de celui-ci.

Une fois la distance radiale souhaitée établie, celle-ci peut être figée par un moyen de verrouillage 20. Le moyen de verrouillage 20 peut par exemple être associé à une pluralité de tiges déployables 21 s'étendant entre deux montants périphériques 10 adjacents, tel que cela est illustré sur la figure 2.

Du fait de la prise du tronçon de garnissage 2 par la tranche, associé au fait que les tronçons de garnissage 2 présentent une forme cylindrique à section circulaire ou sensiblement circulaire, les moyens d'accroche 6 formant partie du dispositif d'agrippement 100 selon l'invention sont agencés les uns par rapport aux autres de manière à présenter ensemble une forme d'arc de cercle, et ce afin que chacun des moyens d'accroche 6 destinés à être au contact du tronçon de garnissage 2 puisse épouser un rayon de courbure de ce dernier. L'agrippement du tronçon de garnissage 2 est ainsi facilité et plus stable. Afin que l'agrippement du tronçon de garnissage 2 par les moyens d'accroche 6 soit optimal, la courbure de l'arc de cercle formé par les moyens d'accroche 6 est réglable afin de s'adapter à tous diamètres de tronçons de garnissage 2, tel que cela va être décrit plus en détails ci-après.

Après agrippement du tronçon de garnissage 2 par les moyens d'accroche 6 du dispositif d'agrippement, ces derniers peuvent être pilotés de manière individuelle l'un par rapport à l'autre dans le but de pousser sur un point précis du tronçon de garnissage 2 et déformer localement ce dernier. Une telle déformation locale peut être préconisée lorsqu'un différentiel de forme existe entre le tronçon de garnissage 2 et la virole au sein de laquelle le tronçon de garnissage 2 est destiné à être inséré. La déformation locale permet ainsi de modifier légèrement la forme du tronçon de garnissage 2 afin que celui-ci puisse par la suite être inséré dans la virole de manière plus aisée. La déformation locale est notamment rendue possible par un pilotage d'un système motorisé associé à chacun des moyens d'accroche, qui là encore va être décrit plus en détails ci-après.

Au moins deux montants périphériques 10 comprennent chacun un crochet 28. Lorsque le dispositif d'insertion 5 est disposé à proximité de la virole 3 dans le but d'y insérer par la suite un tronçon de garnissage 2, les crochets 28 viennent se refermer sur la virole 3, par exemple sur une collerette 29 s'étendant de manière circonférentielle autour de la virole 3 au niveau de l'extrémité de la virole 3 par laquelle les tronçons de garnissage 2 sont insérés. Les crochets 28 assurent ainsi un maintien mécanique de la virole 3 en regard du dispositif d'insertion 5, y compris pendant l'insertion du tronçon de garnissage 2 au sein de la virole 3. La présence de ces crochets 28 permet d'effectuer un contrepoids suffisant pour retenir la virole 3 malgré les forces exercées sur celle-ci lors de l'insertion des tronçons de garnissage 2. Les crochets 28 évitent ainsi la présence d'un encombrant contrepoids disposé à l'arrière de la virole 3 pour bloquer celle-ci lors de la poussée du tronçon de garnissage 2. Afin de pouvoir se refermer sur la collerette 29 de la virole 3, les crochets 28 doivent s'étendre le long de chacun des montants périphériques 10, au-delà des moyens d'accroche 6 également portés par les montants périphériques 10. Cette extension peut créer une gêne mécanique lorsque les moyens d'accroche 6 agrippent un tronçon de garnissage 2 sur la pile de tronçons de garnissage, particulièrement lorsque le dernier tronçon de garnissage 2 de la pile est agrippé, les crochets 28 pouvant faire butée sur le sol.

Pour pallier cela, chacun des crochets 28 est monté sur un vérin rétractable 30 afin d'escamoter les crochets 28 et d'éviter toute contrainte mécanique liée à un crochet 28 déployé. Les crochets 28 sont ainsi mobiles entre une position escamotée, notamment lorsque le dispositif d'insertion 5 est en position verticale pour agripper les tronçons de garnissage 2 et une position déployée permettant de fixer le dispositif d'insertion 5 à la virole 3 au moment où le tronçon de garnissage 2 agrippé est maintenu au niveau de l'extrémité de la virole 3. Lorsque les crochets 28 sont en position déployée, ceux-ci sont configurés pour éviter toute interférence mécanique avec le moyen d'accroche 6 disposé sur le même montant périphérique 10. Afin d'éviter lesdites interférences mécaniques, les crochets 28 peuvent présenter une forme particulière et/ou s'escamoter et s'étendre en pivotant autour du montant périphérique 10 considéré, le pivotement se faisant à l'opposé du montant principal afin de ne pas entrer en contact avec le moyen d'accroche 6.

Au moins deux des montants périphériques 10 sont pourvus de dispositifs télescopiques 22. Les dispositifs télescopiques 22 peuvent être agencés sur un montant périphérique 10 également pourvu d'un moyen d'accroche 6, l'essentiel étant que l'ensemble de ces éléments n'interfèrent pas mécaniquement les uns par rapport aux autres. Les dispositifs télescopiques 22 permettent d'opérer une poussée du tronçon de garnissage 2 une fois celui-ci mis en place en regard de la virole. Cette poussée est effectuée dès lors que le dispositif d'agrippement 100 est configuré pour que les moyens d'accroche 6 soient dans une position de dégagement, c'est-à-dire dès lors que des systèmes motorisés appropriés permettent de faire passer chacun des moyens d'accroche d'une position active d'agrippement à une position de dégagement en modifiant leur position radiale, de manière à ce que les moyens d'accroche lâchent le tronçon de garnissage 2. Les dispositifs télescopiques 22 se déploient afin de pousser le tronçon de garnissage 2 jusqu'au bout de la virole, et ce peu importe la longueur de cette dernière. Si un ou plusieurs tronçons de garnissage 2 ont déjà été précédemment insérés dans la virole, les dispositifs télescopiques poussent le tronçon de garnissage 2 jusqu'à ce que ce dernier soit au contact du tronçon de garnissage 2 précédemment inséré.

Afin que l'insertion du tronçon de garnissage 2 au sein de la virole soit effectuée de manière uniforme, avec le minimum d'à-coups, le dispositif d'insertion 5 peut comprendre un moyen de poussée 23 fixé à l'extrémité de chaque dispositif télescopique 22, tel que cela est plus particulièrement visible sur la figure 1, ce moyen de poussé étant destiné à être en contact direct avec le tronçon de garnissage 2 au cours de l'insertion. Le moyen de poussée 23 répartit mécaniquement les forces exercées par chacun des dispositifs télescopiques 22 en appuyant sur tout le pourtour du tronçon de garnissage 2, de manière à éviter la localisation des forces uniquement au niveau de l'extrémité des dispositifs télescopiques 22. Le moyen de poussée 23 permet ainsi d'éviter d'endommager le tronçon de garnissage 2 inséré à cause d'une force de poussée localisée. Lorsque les dispositifs télescopiques 22 sont repliés, le moyen de poussée 23 est disposé au voisinage des montants périphériques 10. Les dispositifs télescopiques et le moyen de poussée constituent un exemple de moyens d'insertion du tronçon de garnissage, mais ce dernier pourrait être inséré d'autres manières et avec d'autres moyens sans sortir du contexte de l'invention, dès lors que le dispositif d'insertion met en oeuvre un module de déploiement conformément à l'invention.

A titre d'exemple, tel qu'illustré sur la figure 1, le dispositif d'insertion 5 comprend six montants périphériques 10 dont trois d'entre eux sont pourvus de dispositifs télescopiques 22. La répartition des dispositifs télescopiques 22 est effectuée de manière régulière autour de l'axe principal 11.

Afin de procéder à l'insertion de tronçons de garnissage 2 pouvant atteindre des diamètres conséquents, chacun des dispositifs télescopiques 22 présente une force de poussée d'au moins 1t. Cette force de poussée est répartie sur tout le pourtour du tronçon de garnissage 2 à l'aide du moyen de poussée 23.

Les dispositifs télescopiques 22 se déploient au moment où le tronçon de garnissage 2 est positionné en regard de l'entrée de la virole 3. Lorsque l'insertion du tronçon de garnissage 2 est initiée, le moyen de poussée 23 est entraîné par le déploiement des dispositifs télescopiques 22 et vient au contact du tronçon de garnissage 2. La zone de contact du moyen de poussée 23 au niveau du tronçon de garnissage 2 correspond au moins à une zone annulaire périphérique 31 rapportée sur le tronçon de garnissage 2 poussé. La zone annulaire périphérique 31 est ainsi en regard d'une périphérie du tronçon de garnissage 2, c'est-à-dire au voisinage d'un bord du tronçon de garnissage 2.

Lors de la poussée du tronçon de garnissage 2, la force exercée par les dispositifs télescopiques 22, et par analogie par le moyen de poussée 23, est préférentiellement localisée au niveau de la périphérie du tronçon de garnissage 2 car c'est au niveau de la périphérie que les forces opposées à la poussée se manifestent, notamment les forces de frottement du tronçon de garnissage 2 contre les parois de la virole 3. La poussée effectuée au niveau de la zone annulaire périphérique 31 permet donc de compenser les forces de frottements exercées sur le tronçon de garnissage 2 lors de l'insertion de celui-ci au sein de la virole 3. La compensation des forces de frottement est particulièrement efficace dans le cas où le dispositif d'insertion est équipé d'un moyen de poussée 23 tel qu'il vient d'être décrit car celui-ci est agencé au plus proche de la localisation de ces forces de frottement.

Tel que cela est illustré sur la figure 1, le moyen de poussée 23 présente avantageusement une forme annulaire dont la dimension radiale correspond à la dimension de la zone annulaire périphérique 31 du tronçon de garnissage 2.

Le module de déploiement permettant de s'adapter à différents diamètres de tronçon de garnissage 2, plusieurs moyens de poussée 23 de dimensions différentes sont conçus et l'installation du moyen de poussée 23 adéquat est effectuée après la détermination de la distance radiale adéquate entre le montant principal et les montants périphériques 10.

Malgré la répartition régulière des dispositifs télescopiques 22 et la présence du moyen de poussée 23, il est possible qu'une force de frottement exercée sur le tronçon de garnissage 2 en cours d'insertion soit plus intense localement. Cette force de frottement localisée peut être due à une position horizontale de la virole 3 et/ou celle du tronçon de garnissage 2. La gravité peut effectivement entraîner un contact plus appuyé du tronçon de garnissage 2 contre la paroi de la virole 3, provoquant ainsi une dissymétrie des forces conséquentes au contact du tronçon de garnissage 2 contre la virole 3. D'autres facteurs générant une force de frottement localisée peuvent entrer en compte, comme par exemple un état de surface de la paroi de la virole 3 ou un état de surface de la tranche du tronçon de garnissage 2. Afin d'équilibrer la force de poussée, chaque dispositif télescopique 22 peut être contrôlé individuellement l'un par rapport à l'autre afin d'intensifier l'une ou l'autre des forces de poussée de manière à compenser une force de frottement locale élevée. Afin de détecter ces forces de frottement locales, chaque extrémité de chaque dispositif télescopique 22 peut par exemple comprendre un capteur de résistance mesurant les forces de frottement et donc apte à détecter une force de frottement élevée.

Lorsque les dispositifs télescopiques 22 se déploient pour pousser le tronçon de garnissage 2 au sein d'une virole 3 présentant une longueur importante, par exemple plusieurs dizaines de mètres, les dispositifs télescopiques 22 se déploient jusqu'à atteindre une longueur conséquente pouvant nuire à leur stabilité. Le dispositif d'insertion 5 peut donc comprendre un organe de maintien 32 relié à l'ensemble des dispositifs télescopiques 22 et agencé de sorte à être sensiblement à égale distance entre le moyen de poussée 23 et l'entrée de la virole 3. L'organe de maintien 32 a pour fonction de maintenir la position de chacun des dispositifs télescopiques 22 ainsi que la distance entre chacun d'entre eux. L'organe de maintien 32 participe donc à la répartition des forces exercées sur le tronçon de garnissage 2 inséré. L'organe de maintien 32 assure également la stabilité des dispositifs télescopiques 22, en évitant de potentielles flexions de ces derniers pouvant survenir en cas d'extension à une longueur élevée desdits dispositifs télescopiques 22. Tel que cela est illustré en figure 1, l'organe de maintien 32 présente une forme triangulaire afin de maintenir trois dispositifs télescopiques 22 équitablement répartis autour de l'axe principal 11. La forme de l'organe de maintien 32 peut toutefois varier en fonction du nombre de dispositifs télescopiques 22 inclus dans le dispositif d'insertion 5. Dans une variante non représentée, l'organe de maintien 32 peut comporter un jeu de roulettes, disposées chacune dans le prolongement des branches de l'organe de maintien, au-delà des dispositifs télescopiques, qui sont respectivement au contact de la face interne de la paroi périphérique de la virole. On vise alors à assurer un guidage continu de l'organe de maintien au sein de la virole lors du déploiement des dispositifs télescopiques et l'insertion d'un tronçon de garnissage. Ce guidage continu, par contact d'au moins une des roulettes contre la virole, permet de faciliter l'insertion malgré le poids de l'ensemble formé par les bras télescopiques et le moyen de poussée 23 qui pourrait amener l'ensemble à se désaxer.

De manière alternative ou complémentaire, le moyen de poussée peut également comporter une ou plusieurs roulettes agencées en périphérie pour être au contact de la face interne de la paroi tubulaire de la virole lors de l'insertion des tronçons de garnissage au sein de la virole.

La figure 2 rend plus particulièrement visible le module de déploiement, ici représenté sans la structure porteuse associée. Le fonctionnement du module de déploiement va être plus particulièrement décrit en référence à cette figure, et il va notamment être décrit comment la distance radiale entre le montant principal et les montants périphériques est modifiée.

Le montant principal 9 comprend deux bagues fixes 17, chacune des bagues fixes 17 étant agencée au niveau de chaque portion terminale dudit montant principal 9.

Le montant principal 9 comprend un corps télescopique 18 apte à modifier une dimension principale du montant principal 9. Ainsi, en modifiant la longueur du montant principal 9, il est possible d'augmenter ou de réduire la distance entre les deux bagues fixes 17. La longueur du montant principal 9 peut être réglée de manière manuelle ou via un organe de contrôle non représenté. Le corps télescopique 18 permet de modifier la longueur du montant principal 9 en déployant ou rétractant au moins l'une des portions terminales de celui-ci.

La première extrémité 14 de chaque branche 12 du duo de branches 13 reliant le montant principal 9 à l'un des montants périphériques 10 est plus particulièrement liée à l'une des bagues fixes 17 agencées sur le montant principal 9. Chaque duo de branches 13 comprend ainsi une première branche 12 dont la première extrémité 14 est liée à une première bague fixe 17, et une deuxième branche 12 dont la première extrémité 14 est liée à une deuxième bague fixe 17. La deuxième extrémité 15 des deux branches 12 est quant à elle fixée sur le montant périphérique 10 et au moins l'une d'entre elles peut coulisser le long de celui-ci, par exemple à l'aide d'une glissière 19 formée au niveau de l'une des faces du montant périphérique 10. Dans l'exemple illustré, deux glissières 19 sont représentées pour que chacune des deuxièmes extrémités 15 soient montées coulissantes le long du montant périphérique correspondant.

Ainsi, lorsque la longueur du montant principal 9 est modifiée grâce au corps télescopique 18, la distance entre les bagues fixes 17 et donc la distance entre les premières extrémités 14 de chacune des deux branches 12 sont également modifiées. Les branches 12 étant reliées en un point formant liaison pivot 16, ce point tend à se rapprocher ou s'éloigner du montant principal 9 en fonction de l'écartement ou du rapprochement l'une de l'autre des premières extrémités 14. Le mouvement du corps télescopique 18 entraîne de la sorte une modification de l'inclinaison des branches 12 de chacun des duos de branches 13 et modifie ainsi la distance radiale entre le montant principal 9 et les montants périphériques 10.

Tel que cela a été évoqué précédemment, le module de déploiement 8 a ainsi comme fonction de modifier une distance radiale entre le montant principal 9 et chacun des montants périphériques 10, les moyens d'accroche 6 du dispositif d'agrippement 100 du tronçon de garnissage étant agencés sur lesdits montants périphériques 10, que ceux-ci soient associés ou non à des dispositifs télescopiques 22 tels qu'évoqués précédemment et pour lesquels un boîtier d'actionnement du dispositif télescopique a été représenté en pointillé sur la figure 2. Les moyens d'accroche 6 peuvent ainsi être écartés pour pouvoir être en prise autour de tronçons de garnissage 2 de différents diamètres. Plus la longueur du montant principal 9 est élevée, plus les bagues fixes 17 sont éloignées l'une par rapport à l'autre, et plus les montants périphériques 10 sont proches du montant principal 9, adaptant le dispositif d'insertion 5 à un petit diamètre de tronçon de garnissage 2. A l'inverse, plus la longueur du montant principal 9 est faible, plus les bagues fixes 17 sont rapprochées l'une par rapport à l'autre, et plus les montants périphériques 10 sont éloignés du montant principal 9, adaptant le dispositif d'insertion 5 à un grand diamètre de tronçon de garnissage 2. Le module de déploiement 8 telle qu'il vient d'être évoqué permet donc d'adapter le dispositif d'insertion 5 à une pluralité de diamètres de tronçons de garnissage 2 et de viroles. On va maintenant décrire plus en détails le dispositif d'agrippement 100 selon l'invention, en référence notamment aux figures 2 à 8.

La figure 2 rend notamment visible différentes parties précédemment décrites et qui participent à former le dispositif d'agrippement, à savoir une pluralité de moyens d'accroche 6 et un support 60 formé ici par les montants périphériques 10 du module de déploiement 8. Tel que cela a pu être évoqué précédemment, les moyens d'accroche 6, ici au nombre de six, sont disposés en forme de cercle, régulièrement espacés les uns des autres, de manière à former une emprise régulière sur le tronçon de garnissage 2 à agripper.

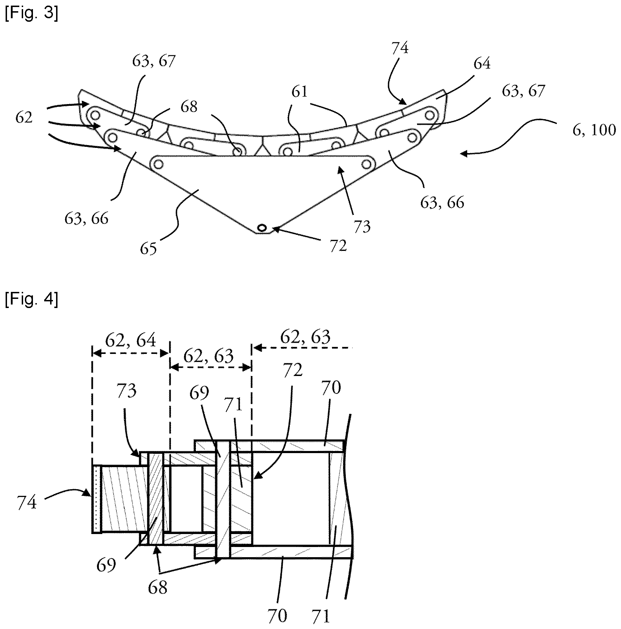

Un moyen d'accroche 6 est plus particulièrement visible sur la figure 3. Il comporte plusieurs éléments articulés 61, agencés en étages 62 successifs, parmi lesquels une pluralité de paliers 63 servant de support pour l'articulation d'éléments de l'étage suivant, et une pluralité de patins 64 formant le dernier étage du moyen d'accroche 6 et destinés à être au contact du tronçon de garnissage 2 à agripper.

Le moyen d'accroche 6 comporte ici trois étages 62 successifs, qui s'étendent tous radialement les uns après les autres, depuis un palier de base 65 disposé au voisinage du support. Un premier étage 62 est formé par deux paliers, ici deux premiers paliers additionnels 66, respectivement montés articulés sur le palier de base 65. Un deuxième étage 62 est formé par quatre paliers, ici quatre deuxièmes paliers additionnels 67, montés articulés deux à deux sur chacun des premiers paliers additionnels 66 du premier étage. Un troisième étage 62 est formé par les patins 64 respectivement montés articulés sur l'un des deuxièmes paliers additionnels 67 du deuxième étage.

Chaque palier 63 présente au moins un moyen d'articulation 68, ici deux moyens d'articulation, apte à coopérer avec un palier, ou un patin le cas échéant, de l'étage suivant et plus particulièrement avec un axe d'articulation 69 de ce palier ou de ce patin.

Plus particulièrement, chaque palier 63 est formé de deux platines 70 en superposition l'une de l'autre et d'une entretoise 71 disposée entre les deux platines, à une extrémité du palier 63 et destinée à maintenir les deux platines 70 à distance l'une de l'autre. L'extrémité du palier à laquelle est disposée l'entretoise 71 sera par la suite appelée extrémité proximale 72, du fait que ce soit, lorsque le dispositif d'agrippement 100 est assemblé, l'extrémité du palier 63 la plus proche du support 60 du dispositif d'agrippement 100. A l'extrémité radiale opposée, à savoir l'extrémité distale 73, le palier 63 est ouvert de sorte qu'un palier de l'étage 62 suivant ou un patin 64 peut être logé entre les platines 70 de ce palier 63. A cet effet, on comprend que la hauteur, c'est-à-dire ici la dimension selon la direction de superposition des platines 70 et donc selon une direction perpendiculaire au plan d'allongement des platines, d'un palier d'un étage 62 donné est supérieure à la dimension correspondante d'un palier ou d'un patin d'un étage 62 différent plus éloigné du support 60.

Tel que cela est visible des figures 3 et 4, chaque palier 63 présente une forme sensiblement triangulaire avec un sommet au niveau de l'extrémité proximale 72 et deux sommets au niveau de l'extrémité distale 73. A chacun des sommets, des moyens d'articulation 68 sont prévus pour coopérer avec l'un des autres éléments articulés 61 du moyen d'accroche 6.

Dans l'exemple illustré, les deux sommets distaux comportent des orifices aptes à recevoir un axe d'articulation 69 d'un autre élément articulé 61 et le sommet proximal comporte un axe d'articulation 69 formant saillie pour coopérer avec un autre élément articulé 61 ou avec le support 60 dans le cas du palier de base 65. Plus particulièrement, au niveau de l'extrémité proximale 72 d'un palier ou d'un patin, l'entretoise est traversée par un axe d'articulation 69 qui dépasse axialement de part et d'autre des platines 70 de manière à former des saillies axiales.

La figure 4 rend plus particulièrement visible la structure d'un de ces paliers 63, formant ici un étage de paliers disposés entre d'autres paliers 63 et l'étage final de patins 64. Tel que cela a pu être évoqué précédemment, l'axe d'articulation 69 solidaire de ce palier 63 forme deux saillies de part et d'autre des platines 70 de manière à venir se loger dans des orifices correspondants du palier 63 le recevant, et ce palier 63 présente à une extrémité radiale opposée, ou extrémité distale 73, des moyens d'articulation 68 sous forme d'orifices aptes à recevoir un axe d'articulation 69, ici solidaire d'un patin 64. A chacune de ces extrémités, l'axe d'articulation et les orifices coopèrent de manière à permettre le mouvement de rotation autour de l'axe d'articulation de l'élément articulé correspondant.

Au moins un patin 64 formant l'étage distal, ou étage final, du dispositif d'agrippement 100 présente une surface d'accroche 74 tournée à l'opposé des étages de paliers 63. La surface d'accroche 74 peut être formée par une couche de revêtement dans un matériau différent de celui du reste du patin. Elle peut de manière alternative ou complémentaire présenter des microstructures, par exemple sous forme de picots, pour améliorer l'accroche sur le tronçon de garnissage 2.

Chaque surface d'accroche 74 peut s'inscrire dans un plan droit, et plus particulièrement un plan perpendiculaire à la direction radiale le long de laquelle se succèdent les étages des éléments articulés du moyen d'accroche. En d'autres termes, la surface d'accroche 74 destinée à être au contact d'un bord périphérique cylindrique, peut présenter avantageusement une forme droite, non courbée, tout au moins au repos, c'est-à-dire lorsque le patin 64 n'est pas pressé contre le tronçon de garnissage 2. Chaque patin 64 présente ainsi un point de contact avec le bord périphérique 75 du tronçon de garnissage, qui tend à s'agrandir sous l'effet de la pression exercée sur le patin contre le tronçon de garnissage lors de l'étape d'agrippement, et la pluralité des patins 64 disposés les uns à côté des autres dans l'étage 62 final du moyen d'accroche permet de créer un profil de contact, point de contact par point de contact, qui reprend la forme cylindrique droite du tronçon de garnissage.

Les articulations 68, 69 formées entre deux paliers 63, ou entre un palier 63 et un patin 64, sont ajustées de sorte que le pivotement de l'un par rapport à l'autre soit possible sous contrainte, mais que les éléments ainsi articulés 61 puissent garder une position sensiblement égale à leur position théorique en l'absence de contraintes. En d'autres termes, chaque moyen d'accroche 6 garde sensiblement la forme illustrée sur la figure 3 jusqu'à ce que les patins 64 entrent en contact avec le bord périphérique 75 du tronçon de garnissage 2 à agripper et qu'ils soient amenés à pivoter par rapport au palier 63 qui les porte, ces paliers 63 pouvant à leur tour être amenés à pivoter par rapport aux paliers 63 qui les portent.

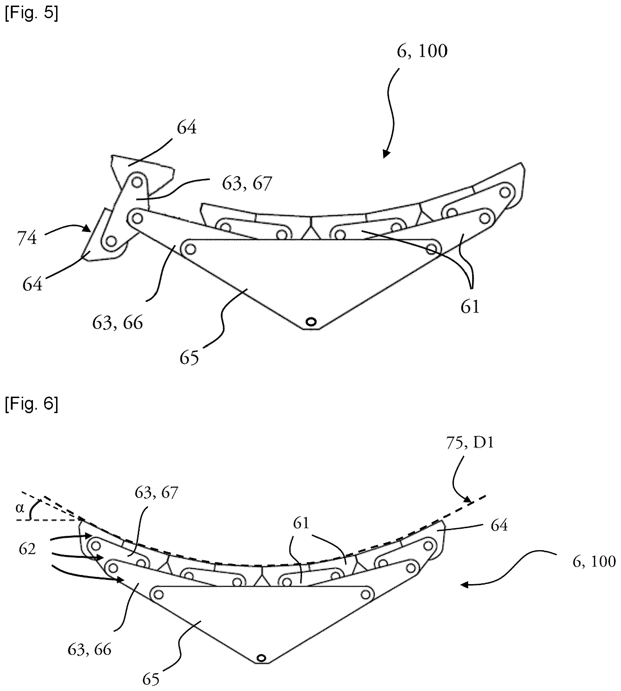

En d'autres termes, l'articulation des éléments articulés 61 est contrôlée, de sorte que l'exemple donné sur la figure 5 n'est que théorique pour faciliter la compréhension du lecteur au sujet de cette notion d'articulation d'un patin et d'un palier. A titre d'illustration, sur cette figure 5, les deux paliers, ou premiers paliers additionnels 66, reliés au palier de base 65 gardent la même orientation de même que trois paliers, ou deuxièmes paliers additionnels 67, sur quatre du dernier étage de paliers. Un seul palier 63, ici à une extrémité du moyen d'accroche 6, est pivoté sensiblement à 90° et de manière analogue, à titre d'illustration, un seul des deux patins 64 portés par ce palier 63 est également pivoté, ici de manière exagérée sensiblement à 90°, pour illustrer le pivotement indépendant de chacun des patins par rapport au palier qui les porte.

La pluralité d'étages 62 d'éléments articulés 61 permet de modifier la configuration du dispositif d'agrippement 100 selon le diamètre du tronçon de garnissage 2 à agripper.

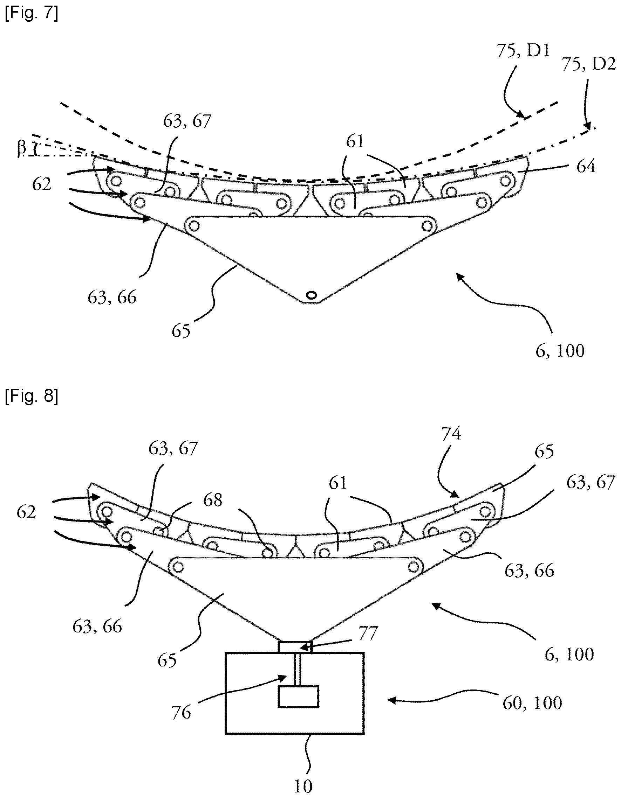

De la sorte et tel que cela est illustré sur les figures 6 et 7, les patins 64 formant l'étage distal, c'est-à-dire l'étage le plus éloigné du support 60 et donc le plus proche du tronçon de garnissage 2 à agripper, peuvent être plus ou moins à plat et donc présenter localement, patin par patin, une forme sensiblement complémentaire au rayon de courbure de tel ou tel tronçon de garnissage.

A titre d'exemple, la dimension d'un patin par rapport à un tronçon de garnissage, en considérant la dimension prise dans un plan de coupe du tronçon de garnissage perpendiculaire à son axe de révolution, est de l'ordre de 160mm par rapport à un diamètre compris entre 1m (un mètre) et 5m (cinq mètres) pour le tronçon de garnissage.

La figure 6 rend visible, en traits pointillés, une partie du bord périphérique 75 d'un premier tronçon de garnissage 2 apte à être agrippé par le dispositif d'agrippement 100 de l'invention dans une première configuration, et notamment avec des patins 64 qui présentent un angle d'inclinaison α important, d'une valeur ici sensiblement égale à 45°, entre les patins disposés au centre de la série de patins et les patins disposés à l'extrémité de cette série. Dans cette configuration, des tronçons de garnissage d'un premier diamètre D1 sont agrippés de manière optimale avec des patins de l'ordre de grandeur précédemment évoqué, ce premier diamètre D1 pouvant notamment être de l'ordre d'1m par exemple.

La figure 7 rend visible le même moyen d'accroche 6 dans une autre configuration, car en contact avec un tronçon de garnissage 2 d'un autre diamètre que celui illustré en pointillé sur la figure 6. Sur la figure 7, une partie du bord périphérique 75 d'un deuxième tronçon de garnissage apte à être agrippé par le dispositif d'agrippement de l'invention est illustrée, en traits mixte, dans une deuxième configuration, et notamment avec des patins 64 qui présentent cette fois un angle d'inclinaison β réduit, d'une valeur ici sensiblement égale à 20°, entre les patins disposés au centre de la série de patins et les patins disposés à l'extrémité de cette série. Dans cette configuration des tronçons de garnissage d'un deuxième diamètre D2 sont agrippés de manière optimale avec des patins inchangés par rapport à la configuration illustrée sur la figure 6, ce deuxième diamètre D2 pouvant notamment être de l'ordre de 4m ou 5m.

Le fait que le moyen d'accroche 6 présente comme évoqué précédemment une pluralité d'éléments articulés 61 agencés en plusieurs étages 62 successifs permet d'adapter facilement la configuration des patins 64 du moyen d'accroche 6 en jouant sur les ensembles d'articulation étage par étage et ceci permet d'adapter la configuration du moyen d'accroche 6 à différents diamètres D1, D2, ... de tronçons de garnissage, tel qu'illustré sur la figure 7 où les traits pointillés illustrant le tronçon de garnissage 2 de premier diamètre D1 ont été laissé pour faciliter la comparaison entre la dimension des tronçons de garnissage 2 susceptibles d'être agrippés de manière optimale lorsque l'on passe selon l'invention d'une configuration à l'autre du moyen d'accroche 6.

L'adaptation de la position des patins 64 les uns par rapport aux autres, et par rapport aux paliers 63, au sein du moyen d'accroche 6, s'opère notamment sous l'effet de la contrainte exercée lors du contact entre le tronçon de garnissage 2 et la surface d'accroche 74 des patins 64, notamment par un mouvement radial de resserrement des moyens d'accroche 6 tel qu'il a pu être évoqué précédemment.

On comprend que l'agrippement du tronçon de garnissage 2 par les moyens d'accroche 6 est possible si les moyens d'accroche sont suffisamment écartés radialement dans un premier temps, pour passer autour du bord périphérique 75 du tronçon de garnissage 2, et si ces moyens d'accroche 6 sont par la suite rapprochés radialement pour venir en pression contre le bord périphérique 75. Ce mouvement radial dans un sens puis dans l'autre peut notamment être réalisé par la modification de la dimension radiale du module de déploiement 8 participant à former le support 60 du dispositif d'agrippement 100.

Ce mouvement radial peut également être rendu possible par un système motorisé 76, tel qu'évoqué précédemment et illustré schématiquement sur la figure 8.

Tel qu'illustré sur cette figure 8, le palier de base 65 est fixé sur le support 60 du dispositif d'agrippement 100, ici formé par un montant périphérique 10 du dispositif de déploiement 8 du dispositif d'insertion associé. Un bloc de fixation 77 a été illustré schématiquement à la connexion entre le palier de base 65 et le support 60 du dispositif d'agrippement 100.

Un système motorisé 76 est disposé au sein du support 60 pour pouvoir agir sur le palier de base 65 et le bloc de fixation 77, et exercer un effort radial de poussée tendant à faire coulisser le palier de base 65 en l'éloignant de la structure 60 et donc rapprocher les patins 64 disposés à l'opposé de la structure en direction du tronçon de garnissage 2.

Le système motorisé 76 peut notamment consister en un moteur électrique pas à pas. Le système motorisé 76 peut être mis en oeuvre pour initier l'opération d'agrippement, en écartant puis en rapprochant radialement le moyen d'accroche 6 correspondant par rapport au tronçon de garnissage 2, et pour finaliser l'opération d'agrippement, en écartant radialement le moyen d'accroche 6.

Le système motorisé 76 peut également être utilisé pour générer une contrainte de pression spécifique au moyen d'accroche correspondant, et permettre ainsi tel que cela a pu être détaillé précédemment un effort de pression ciblé sur telle ou telle zone du bord périphérique 75 du tronçon de garnissage 2.

Une variante de l'invention est illustrée sur la figure 9, qui diffère de ce qui précède en ce que le support 60 est ici commun à tous les moyens d'accroche 6. Le support 60 présente une forme polygonale, ici hexagonale, qui comporte à chaque sommet 78 un bloc de fixation 77 d'un des moyens d'accroche 6 semblable à ce qui vient d'être décrit. Un système motorisé 77 est dans ce cas particulièrement intéressant pour modifier la position radiale des moyens d'accroche 6, dans un contexte où le support 60 présente une dimension fixe.

Une telle variante peut notamment être combinée avec un dispositif de poussée distinct et simplifié, pour réaliser l'insertion du tronçon de garnissage dans la virole tel que cela a pu être évoqué précédemment.

Les figures 10 à 12 illustrent schématiquement un exemple de déroulé du procédé d'insertion d'un tronçon de garnissage 2 selon l'invention.

Comme cela a été décrit précédemment, c'est le système d'insertion 1 dans son ensemble, c'est-à-dire le dispositif d'insertion 5 et la structure porteuse 4, qui permet de mettre en oeuvre le procédé d'insertion. Les figures 10 à 12 illustrent le procédé d'insertion une fois l'étape d'ajustement achevée, c'est-à-dire après que la distance radiale entre le montant principal et les montants périphériques du module de déploiement a été déterminée et que les moyens d'accroche sont prêts à agripper les tronçons de garnissage. Ainsi, la figure 10 représente notamment une étape d'agrippement d'un tronçon de garnissage 2 sur la pile 24 verticale de tronçons de garnissage 2. Pour cela, le système d'insertion 1 peut se déplacer dans son ensemble jusqu'à la pile 24 de tronçons de garnissage, par exemple à l'aide de rails 34 tel qu'évoqué précédemment.

Le dispositif d'insertion 5 est apte à effectuer dans son ensemble un mouvement de translation 35 par rapport à la structure porteuse 4, par exemple une translation le long des piliers 7 de manière verticale, c'est-à-dire de manière parallèle auxdits piliers 7. Ce mouvement de translation 35 peut être assurée par exemple par le premier moteur 25 actionné à distance. Ce mouvement de translation 35 est par exemple utilisé afin que le dispositif d'insertion 5 atteigne le sommet de la pile 24 verticale de tronçons de garnissage 2 et surplombe celui-ci, tel que cela est illustré sur la figure 10. Ceci étant fait, et une fois la structure porteuse 4 disposée autour de la pile 24 verticale de tronçons de garnissage 2, le mouvement de translation 35 permet de rapprocher le dispositif d'insertion 5 de la pile 24 de tronçons de garnissage 2 afin d'agripper le tronçon de garnissage 2 au sommet de ladite pile 24 via les moyens d'accroche 6. Une fois qu'un tronçon de garnissage 2 est agrippé, le dispositif d'insertion 5 est de nouveau déplacé de manière verticale afin de soulever le tronçon de garnissage 2 agrippé.

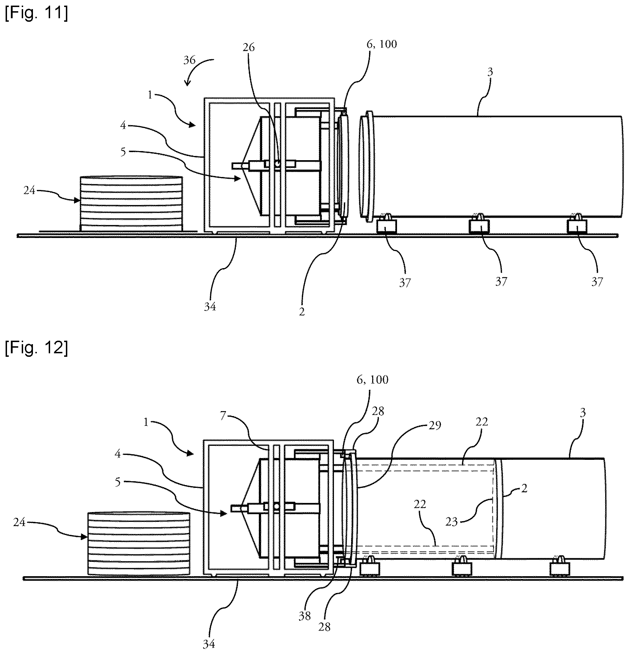

La figure 11 illustre une étape de rotation du dispositif d'insertion 5 et une étape de déplacement du système d'insertion 1 jusqu'à la virole 3. Ces deux étapes surviennent après qu'un tronçon de garnissage 2 a été agrippé par les moyens d'accroche 6. Pour assurer l'étape de rotation du dispositif d'insertion 5 par rapport à la structure porteuse 4, le dispositif d'insertion 5 comprend des moyens de mise en rotation, ici via le système d'engrenages illustré sur la figure 1, assurant au moins une rotation 36 à 90° ou sensiblement 90° du dispositif d'insertion 5 par rapport à la structure porteuse 4. Le deuxième moteur 26 peut être porté par la structure porteuse 4 et piloté de sorte que l'arbre de sortie moteur actionne le système d'engrenages et donc la rotation 36 du dispositif d'insertion 5 par rapport à la structure porteuse 4. Ce dispositif de rotation entraîné par le deuxième moteur 26 permet ainsi au dispositif d'insertion 5 de basculer entre une première position dite verticale, permettant d'agripper les tronçons de garnissage 2 sur la pile 24 de tronçons de garnissage 2 tel que cela est illustré en figure 10, et une deuxième position dite horizontale afin d'agencer le tronçon de garnissage 2 agrippé en regard de la virole 3 horizontale tel que cela est illustré sur la figure 11.

Par la suite, la structure porteuse 4 peut se déplacer tout en portant le dispositif d'insertion 5 dans le but de rapprocher le tronçon de garnissage 2 agrippé de la virole 3 afin de l'y insérer, par exemple grâce aux rails 34 tel qu'évoqué précédemment. Afin de stabiliser la virole 3, celle-ci peut être disposée sur des appuis 37.

La figure 12 illustre l'étape de positionnement du dispositif d'insertion 5 à l'entrée de la virole 3 ainsi que l'étape de poussée du tronçon de garnissage 2 au sein de la virole 3. Afin de positionner correctement le tronçon de garnissage 2 à l'entrée de la virole 3, la position verticale du dispositif d'insertion 5 peut éventuellement être ajustée grâce au mouvement de translation vertical le long des piliers 7 de la structure porteuse 4 afin que le tronçon de garnissage 2 agrippé soit parfaitement en regard de l'entrée de la virole 3. Ceci étant fait, les crochets 28 viennent se refermer sur la collerette 29 de la virole 3 afin de maintenir le dispositif d'insertion 5 en regard de l'entrée de la virole 3. L'étape de poussée débute après que les moyens d'accroche 6 prennent une position de dégagement pour lâcher le tronçon de garnissage 2. Après le relâchement du tronçon de garnissage 2 par les moyens d'accroche 6 et avant que les dispositifs télescopiques 22 ne soient déployés pour insérer le tronçon de garnissage 2, ce dernier peut par exemple reposer sur un berceau de maintien 38 afin que le tronçon de garnissage 2 reste positionné correctement en regard de l'entrée de la virole. Les dispositifs télescopiques 22 se déploient alors afin que le moyen de poussée 23 insère le tronçon de garnissage 2 au sein de la virole 3, tel que ce qui a été décrit précédemment. Une fois l'insertion du tronçon de garnissage 2 effectuée, les dispositifs télescopiques 22 peuvent se rétracter, et le système d'insertion 1 peut de nouveau se déplacer pour récupérer le tronçon de garnissage 2 suivant. Le procédé d'insertion recommence alors à partir de l'étape d'agrippement décrite en figure 10.

L'invention, telle qu'elle vient d'être décrite, atteint bien le but qu'elle s'était fixée, et permet de proposer un dispositif d'insertion d'un tronçon de garnissage au sein d'une virole comprenant des moyens d'accroche 6 permettant d'assurer l'agrippement de tronçons de garnissage de différents diamètres. Des variantes non décrites ici pourraient être mises en oeuvre sans sortir du contexte de l'invention, dès lors que, conformément à l'invention, elles comprennent un dispositif d'insertion conforme à l'invention.

## Revendications

1. Dispositif d'insertion (5) d'au moins un tronçon de garnissage (2) pour une colonne de séparation gaz/liquide au sein d'une virole (3) cylindrique, dans lequel un module de déploiement (8) comporte un montant principal (9), centré autour d'un axe principal (11) du dispositif d'insertion, et une pluralité de montants périphériques (10) agencés de manière circonférentielle et régulière autour de l'axe principal (11), chacun des montants périphériques (10) participant à former le support (60) d'un dispositif d'agrippement (100) comportant un support (60) formant bâti et des moyens d'accroche (6) reliés à ce support et répartis angulairement pour entourer le tronçon de garnissage (2) à agripper, au moins un des moyens d'accroche (6) comportant des patins (64) mobiles respectivement destinés à être au contact d'un bord périphérique (75) du tronçon de garnissage (2) et une pluralité de paliers (63) disposés en au moins deux étages (62), chaque palier (63) portant des moyens d'articulation (68) aptes à coopérer avec un palier (63) d'un étage (62) différent ou un des patins (64) mobiles, en portant respectivement un des moyens d'accroche (6) configuré pour agripper un tronçon de garnissage (2), le module de déploiement (8) étant apte à modifier la dimension du dispositif d'insertion (5) pour ajuster la position des moyens d'accroche autour du tronçon de garnissage à agripper, en modifiant une distance radiale entre le montant principal (9) et chacun des montants périphériques (10).

2. Dispositif selon la revendication précédente, **caractérisé en ce que** les moyens d'accroche (6) sont agencés les uns par rapport aux autres de manière à former un cercle, lesdits moyens d'accroche (6) étant régulièrement répartis angulairement.

3. Dispositif selon l'une des revendications précédentes, **caractérisé en ce qu'**il comporte six moyens d'accroche (6).

4. Dispositif selon l'une des revendications précédentes, **caractérisé en ce que** chaque moyen d'accroche (6) comporte un palier de base (65) relié au support (60) du dispositif d'agrippement et qui porte un ensemble de moyens d'articulation (68) aptes à coopérer avec des premiers paliers additionnels (66) formant un premier étage (62) de paliers (63) du dispositif d'agrippement (100).

5. Dispositif selon la revendication précédente, **caractérisé en ce que** les premiers paliers additionnels (66) comportent chacun des moyens d'articulation (68) aptes à coopérer respectivement avec des deuxièmes paliers additionnels (67), formant un deuxième étage (62) de paliers (63) du dispositif d'agrippement (100), ou des patins (64) mobiles.

6. Dispositif selon l'une des revendications précédentes, **caractérisé en ce que** les patins (64) mobiles sont montés pivotants sur des paliers (63) d'un même étage (62) de paliers du dispositif d'agrippement.

7. Dispositif selon l'une des revendications précédentes, **caractérisé en ce que** les patins (64) mobiles comportent une surface d'accroche (74) qui s'inscrit dans un plan droit.

8. Dispositif selon l'une des revendications précédentes, **caractérisé en ce qu'**il comporte un système motorisé (76) configuré pour entraîner en déplacement radial le palier de base (65), ledit système motorisé (76) étant inséré entre le palier de base (65) et le support (60) du dispositif d'agrippement.

9. Dispositif selon l'une des revendications précédentes, **caractérisé en ce que** le support (60) présente la forme d'un cadre polygonal, qui comporte autant de côtés que le dispositif d'agrippement (100) comporte de moyens d'accroche (6), chaque moyen d'accroche (6) étant fixé à l'intérieur du support au niveau d'un sommet (78) du cadre polygonal.

10. Procédé d'insertion d'au moins un tronçon de garnissage (2) pour une colonne de séparation gaz/liquide au sein d'une virole (3) cylindrique mis en oeuvre au moins en partie par un dispositif d'insertion (1) selon l'une des revendications précédentes, comprenant :
• une étape d'ajustement de la distance radiale entre le montant principal (9) et les montants périphériques (10) du module de déploiement (8),
• une étape d'agrippement d'un tronçon de garnissage (2) par les moyens d'accroche (6) du dispositif d'insertion (5),
• une étape de positionnement du tronçon de garnissage (2) au niveau d'une entrée de la virole (3),
• une étape de relâchement du tronçon de garnissage par les moyens d'accroche (6),
• une étape de poussée du tronçon de garnissage (2) au sein de la virole (3).

## Patentansprüche

1. Vorrichtung zum Einsetzen (5) mindestens eines Packungsabschnitts (2) für eine Gas-Flüssigkeit-Trennkolonne ins Innere eines zylindrischen Mantels (3), wobei ein Ausbreitungsmodul (8) einen Hauptholm (9), der um eine Hauptachse (11) der Vorrichtung zum Einsetzen zentriert ist, und mehrere periphere Holme (10), die entlang eines Umfangs gleichmäßig um die Hauptachse (11) herum angeordnet sind, aufweist, wobei jeder der peripheren Holme (10) an der Bildung des Trägers (60) einer Greifvorrichtung (100) beteiligt ist, die einen ein Gestell bildenden Träger (60) und Anhängemittel (6), die mit diesem Träger verbunden sind und winkelmäßig verteilt sind, um den zu greifenden Packungsabschnitt (2) zu umgeben, aufweist, wobei mindestens eines der Anhängemittel (6) bewegliche Schuhe (64), die jeweils dazu bestimmt sind, sich mit einem Umfangsrand (75) des Packungsabschnitts (2) in Kontakt zu befinden, und mehrere in mindestens zwei Stufen (62) angeordnete Lager (63) aufweist, wobei jedes Lager (63) Gelenkmittel (68) trägt, die geeignet sind, mit einem Lager (63) einer anderen Stufe (62) oder einem der beweglichen Schuhe (64) zusammenzuwirken, indem sie jeweils eines der Anhängemittel (6) tragen, das dafür ausgelegt ist, einen Packungsabschnitt (2) zu greifen, wobei das Ausbreitungsmodul (8) geeignet ist, die Abmessung der Vorrichtung zum Einsetzen (5) zu ändern, um die Position der Anhängemittel um den zu greifenden Packungsabschnitt herum einzustellen, indem es einen radialen Abstand zwischen dem Hauptholm (9) und jedem der peripheren Holme (10) ändert.

2. Vorrichtung nach dem vorhergehenden Anspruch, **dadurch gekennzeichnet, dass** die Anhängemittel (6) relativ zueinander so angeordnet sind, dass sie einen Kreis bilden, wobei die Anhängemittel (6) in gleichen Winkelabständen verteilt sind.

3. Vorrichtung nach einem der vorhergehenden Ansprüche, **dadurch gekennzeichnet, dass** sie sechs Anhängemittel (6) aufweist.

4. Vorrichtung nach einem der vorhergehenden Ansprüche, **dadurch gekennzeichnet, dass** jedes Anhängemittel (6) ein Basislager (65) aufweist, das mit dem Träger (60) der Greifvorrichtung verbunden ist und das eine Anordnung von Gelenkmitteln (68) trägt, die geeignet sind, mit ersten zusätzlichen Lagern (66) zusammenzuwirken, die eine erste Stufe (62) von Lagern (63) der Greifvorrichtung (100) bilden.

5. Vorrichtung nach dem vorhergehenden Anspruch, **dadurch gekennzeichnet, dass** die ersten zusätzlichen Lager (66) jeweils Gelenkmittel (68) aufweisen, die geeignet sind, jeweils mit zweiten zusätzlichen Lagern (67), die eine zweite Stufe (62) von Lagern (63) der Greifvorrichtung (100) bilden, oder beweglichen Schuhen (64) zusammenzuwirken.

6. Vorrichtung nach einem der vorhergehenden Ansprüche, **dadurch gekennzeichnet, dass** die beweglichen Schuhe (64) schwenkbar an Lagern (63) ein und derselben Stufe (62) von Lagern der Greifvorrichtung angebracht sind.

7. Vorrichtung nach einem der vorhergehenden Ansprüche, **dadurch gekennzeichnet, dass** die beweglichen Schuhe (64) eine Anhängefläche (74) aufweisen, die in einer geraden Ebene angeordnet ist.

8. Vorrichtung nach einem der vorhergehenden Ansprüche, **dadurch gekennzeichnet, dass** sie ein motorisiertes System (76) aufweist, das dafür ausgelegt ist, das Basislager (65) zu einer radialen Bewegung anzutreiben, wobei das motorisierte System (76) zwischen dem Basislager (65) und dem Träger (60) der Greifvorrichtung eingesetzt ist.

9. Vorrichtung nach einem der vorhergehenden Ansprüche, **dadurch gekennzeichnet, dass** der Träger (60) die Form eines vieleckigen Rahmens aufweist, welcher so viele Seiten aufweist, wie die Greifvorrichtung (100) Anhängemittel (6) aufweist, wobei jedes Anhängemittel (6) im Inneren des Trägers an einer Ecke (78) des vieleckigen Rahmens befestigt ist.

10. Verfahren zum Einsetzen mindestens eines Packungsabschnitts (2) für eine Gas-Flüssigkeit-Trennkolonne ins Innere eines zylindrischen Mantels (3), welches wenigstens teilweise von einer Vorrichtung zum Einsetzen (1) nach einem der vorhergehenden Ansprüche durchgeführt wird, umfassend:
• einen Schritt der Einstellung des radialen Abstands zwischen dem Hauptholm (9) und den peripheren Holmen (10) des Ausbreitungsmoduls (8),
• einen Schritt des Greifens eines Packungsabschnitts (2) durch die Anhängemittel (6) der Vorrichtung zum Einsetzen (5),
• einen Schritt der Positionierung des Packungsabschnitts (2) an einem Eingang des Mantels (3),
• einen Schritt der Freigabe des Packungsabschnitts durch die Anhängemittel (6),
• einen Schritt des Schiebens des Packungsabschnitts (2) ins Innere des Mantels (3).

## Claims

1. Insertion device (5) for inserting at least one packing section (2) for a gas/liquid separation column into a cylindrical casing (3), wherein a deployment module (8) has a main member (9), centred around a main axis (11) of the insertion device, and a plurality of peripheral members (10) arranged circumferentially and evenly around the main axis (11), each of the peripheral members (10) contributing to forming the support (60) of a gripping device (100) which has a support (60) forming a chassis and retaining means (6) connected to this support and distributed angularly so as to surround the packing section (2) that is to be gripped, at least one of the retaining means (6) having movable shoes (64) respectively intended to be in contact with a peripheral edge (75) of the packing section (2) and a plurality of platforms (63) disposed in at least two stages (62), each platform (63) bearing articulation means (68) able to interact with a platform (63) of a different stage (62) or one of the movable shoes (64), by bearing a respective one of the retaining means (6) configured to grip a packing section (2), the deployment module (8) being able to modify the dimension of the insertion device (5) in order to adjust the position of the retaining means around the packing section that is to be gripped by modifying a radial distance between the main member (9) and each of the peripheral members (10).

2. Device according to the preceding claim, **characterized in that** the retaining means (6) are arranged in relation to one another so as to form a circle, said retaining means (6) being evenly distributed angularly.

3. Device according to either of the preceding claims, **characterized in that** it has six retaining means (6).

4. Device according to one of the preceding claims, **characterized in that** each retaining means (6) has a base platform (65) which is connected to the support (60) of the gripping device and bears an assembly of articulation means (68) able to interact with first additional platforms (66) forming a first stage (62) of platforms (63) of the gripping device (100).

5. Device according to the preceding claim, **characterized in that** the first additional platforms (66) each have articulation means (68) able to interact respectively with second additional platforms (67), forming a second stage (62) of platforms (63) of the gripping device (100), or movable shoes (64).

6. Device according to one of the preceding claims, **characterized in that** the movable shoes (64) are mounted so as to be able to pivot on platforms (63) of one and the same stage (62) of platforms of the gripping device.

7. Device according to one of the preceding claims, **characterized in that** the movable shoes (64) have a retaining surface (74) which can be inscribed in a straight plane.

8. Device according to one of the preceding claims, **characterized in that** it has a motorized system (76) configured to drive the radial movement of the base platform (65), said motorized system (76) being inserted between the base platform (65) and the support (60) of the gripping device.

9. Device according to one of the preceding claims, **characterized in that** the support (60) has the form of a polygonal frame, which has as many sides as the gripping device (100) has retaining means (6), each retaining means (6) being fixed on the inside of the support at a vertex (78) of the polygonal frame.

10. Method for inserting at least one packing section (2) for a gas/liquid separation column into a cylindrical casing (3), which method is implemented at least partially by an insertion device (1) according to one of the preceding claims and comprises:
• a step of adjusting the radial distance between the main member (9) and the peripheral members (10) of the deployment module (8),
• a step of gripping a packing section (2) by the retaining means (6) of the insertion device (5),
• a step of positioning the packing section (2) at an inlet of the casing (3),
• a step of relaxing the grip on the packing section by the retaining means (6),
• a step of pushing the packing section (2) into the casing (3).
